Europäisches Patentamt

European Patent Office

Office européen des brevets

(19)

(11) Veröffentlichungsnummer: **0 299 531 B1**

## (12) EUROPÄISCHE PATENTSCHRIFT

(45) Veröffentlichungstag der Patentschrift: **16.10.91**

(51) Int. Cl.⁵: **A61C 13/267**

(21) Anmeldenummer: **88111447.4**

(22) Anmeldetag: **15.07.88**

Verbunden mit 88907065.2/0325644
(europäische
Anmeldenummer/Veröffentlichungsnummer)
durch Entscheidung vom 03.05.90.

(54) Herausnehmbare Zahnprothese in Form einer Transversalverbindung, einer Brücke od. dgl.

(30) Priorität: **16.07.87 DE 8709758 U**

(43) Veröffentlichungstag der Anmeldung:
**18.01.89 Patentblatt 89/03**

(45) Bekanntmachung des Hinweises auf die
Patenterteilung:
**16.10.91 Patentblatt 91/42**

(84) Benannte Vertragsstaaten:
**AT BE CH DE ES FR GB GR IT LI LU NL SE**

(56) Entgegenhaltungen:
**DE-A- 3 222 616**
**US-A- 2 107 966**
**US-A- 3 672 057**

**Zeitschrift "Neue Revue"(4) Frühjahr '87, Seite 94**

(73) Patentinhaber: **Gebr. Böger**
**Waterloohain 6/8**
**W-2000 Hamburg 50(DE)**

(72) Erfinder: **Böger, Fritz**
**Heinrich-Plett-Strasse 9**
**W-2000 Hamburg 52(DE)**

(74) Vertreter: **Glaeser, Joachim, Dipl.-Ing.**
**Patentanwälte DIEHL GLAESER HILTL &**
**PARTNER Königstrasse 28**
**W-8000 Hamburg 50(DE)**

## Beschreibung

Die Erfindung bezieht sich auf eine herausnehmbare Zahnprothese, gemäß dem ersten Teil des Patentanspruchs.

Aus der G 86 06 621 welche den nächstliegenden Stand der Technik bildet, ist eine mehrteilige Brücke als Zahnersatz bekannt, wobei die Brücke in ein linguales Teil und in ein labiales Teil unterteilt ist, beide Teile eine gemeinsame, sich in mesio-distaler Richtung erstreckende Berührungsfläche haben und beide Teile lösbar aneinander befestigt sind. Eine derartige Brücke kann eingesetzt werden, ohne daß die benachbarten (gesunden) Zähne bearbeitet werden müssen. Auch ist es möglich, eine Brücke dieser Art einzusetzen, wenn die beiden benachbarten gesunden Zähne sogenannte unter sich gehende Bereiche aufweisen. Es ist jedoch nicht bekannt geworden, wie derartige Brücken eingesetzt werden sollen, ohne daß die Gefahr besteht, daß sich die beiden voneinander lösbaren Teile unbeabsichtigt lösen und die Gefahr des Verschluckens besteht.

Aus der Zeitschrift "Neue Revue", Frühjahr 1987, Seite 94, ist weiterhin eine Brücke der vorgenannten Art bekannt geworden, wobei die mehrteilige Brücke aus einem sogenannten Zwischenglied (dem Ersatz für den fehlenden Zahn) besteht und einem Klemmteil, welcher die beiden benachbarten gesunden Zähne umgreift und auch mit Auflagern versehen ist. Beide Teile werden im Mund des Patienten miteinander verschraubt. Da die Schraube sehr stark angezogen werden muss, um einen sicheren Halt der bekannten Brücke zu gewährleisten, ist andererseits ein späteres Lösen nur schwer möglich.

In der US-PS 2 107 966 ist eine Befestigungsvorrichtung für künstliche Zähne beschrieben. Diese Befestigungsvorrichtung enthält ein Befestigungselement, das bewegbar mit dem Vulkanitbett eines künstlichen Zahns sowie mit einer Klammer verbunden ist, die geeignet ist, mit dem Stützzahn einer Brücke an der Rückseite in Verbindung zu stehen. Außerdem enthält sie ein Glied mit Ansatz, das geeignet ist, mit dem Stützzahn an der Haftrinne seiner Krone in Eingriff zu stehen. Weiterhin weist sie einen Verschlußhaken auf und trägt ein Ankerteil, das geeignet ist, in ein Ende des Vulkanitbettes eingebettet zu werden. Ferner ist ein Verschlußelement mit einem auf einem Halter bewegbaren Verschlußstab vorgesehen. Der Verschlußstab wird mit dem Haken in Eingriff gebracht, worauf die Klammer verriegelt und der künstliche Zahn in seiner Position festgehalten wird. Diese Vorrichtung ist jedoch, wenn sie einmal eingesetzt ist, zum ständigen Tragen vorgesehen. Sie kann nur von einem Fachmann wieder entfernt und erneut eingesetzt werden.

Die DE-OS 32 22 616 beschreibt ein Verfahren zur Herstellung eines in einer Zahnprothese zum Zwecke ihrer Befestigung im Mund des Prothesenträgers bewegbaren Befestigungsgliedes, z.B. eines Riegels, sowie die Herstellung des Bewegungsraumes für dieses Befestigungsglied.

Der Erfindung liegt die Aufgabe zugrunde, eine Prothese der eingangs genannten Art so auszugestalten, daß der Patient selbst die Prothese zwecks Säuberung leicht herausnehmen kann und andererseits durch einfache Handgriffe im Mund an Ort und Stelle wieder befestigen kann.

Diese Aufgabe löst die Erfindung durch eine Prothese mit den kennzeichnenden Merkmalen des Patentanspruchs.

Die Erfindung bezieht sich insbesondere auf eine mehrteilige Brücke als Zahnersatz, aufweisend ein Brückenteil mit Auflagerteilen zur Auflage auf den dem Brückenteil benachbarten Zähnen und einen Brückenanker mit Klammern zum Hintergreifen der dem Brückenteil benachbarten Zähne, wobei das Brückenteil mit sich in die unter sich gehenden Bereiche benachbarter Zähne hineinerstreckenden Vorsprüngen ausgebildet ist.

Die Erfindung wird nachstehend in Form einer Brücke an Hand der Zeichnung beispielhaft erläutert.

Fig. 1     zeigt eine Draufsicht auf die Brücke gemäß der Erfindung.

Fig. 2     zeigt eine Seiten-Teilschnittansicht einer erfindungsgemäßen Brücke.

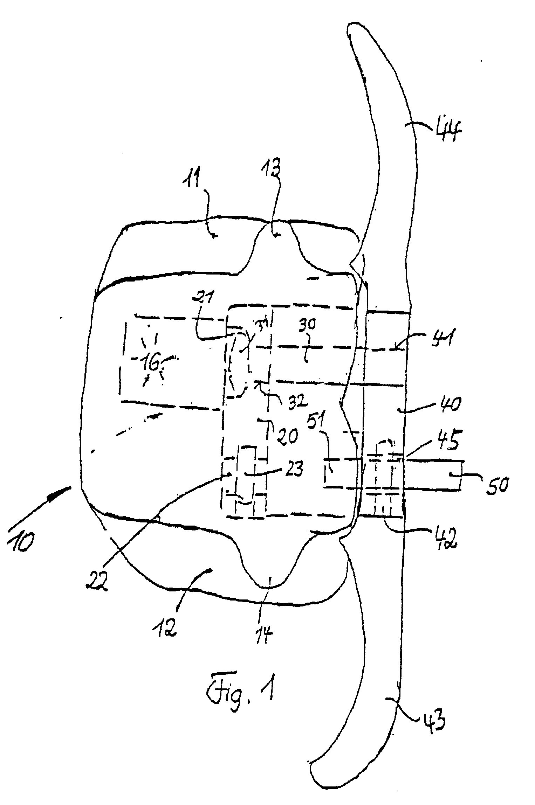

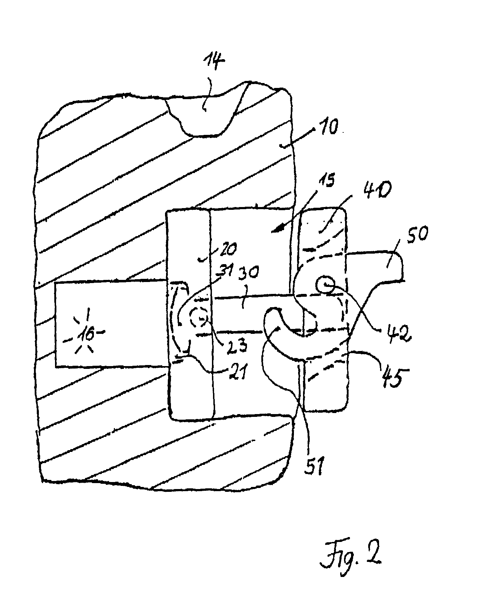

In den Figuren ist mit 10 ein Prothesenteil der Brücke bezeichnet, der im wesentlichen die Form eines Zahnes hat und als Zwischenglied zwischen zwei gesunden Zähnen dienen kann. Bei Fig. 1 blickt man von oben auf die Kaufläche des die Form eines Zahnes aufweisenden Prothesenteils 10. In Fig. 2 ist die Kaufläche im oberen Bereich zu erkennen. Die dem Prothesenteil 10 benachbarten Zähne sind bei Betrachtung der Fig. 2 vor und hinter der Zeichenebene zu denken.

Das Prothesenteil 10 ist - bei Betrachtung nach Fig. 1 - mit vorspringenden Teilen 11 und 12 gezeigt. Diese Teile ragen in die unter sich gehenden Bereiche der benachbarten gesunden Zähne hinein.

Im oberen Bereich des Prothesenteils 10 können sich zwei Auflagerteile 13 und 14 befinden, die so ausgestaltet sind, daß sie auf den benachbarten Zähnen aufliegen können, so daß die Kaukräfte von der Kaufläche des Prothesenteils 10 über diese Auflager 13 und 14 auf die benachbarten Zähne geleitet werden.

Das Prothesenteil 10 ist mit einer inneren Ausnehmung 15 ausgebildet, welche in der Art eines Sackloches von hinten her in das Prothesenteil 10 hineinragt. Am Grund (in den Figuren linksseitig gezeigt) der Ausnehmung 15 befindet sich eine weitere Sacklochöffnung 16, deren Zweck später erläutert wird.

In der Ausnehmung 15 des Prothesenteils 10 befindet sich eine Scheibe 20, welche platten-, aber auch kreisförmig ausgestaltet sein kann. Diese Scheibe 20 ist fest mit dem Prothesenteil 10 verbunden oder einstückig mit diesem ausgebildet.

Die Scheibe 20 ist mit einer Bohrung 32 ausgebildet, die als Führung für einen Führungsstift 30 dient. Die Führungsbohrung 32 öffnet sich weiterhin mit einer Senkbohrung 21 zur Aufnahme des Kopfes 31 des Führungsstiftes 30. Es ist ersichtlich, daß die Scheibe 20 (und damit das Prothesenteil 10) auf dem Führungsstift 30 ausgeführte Bewegungen durchführen kann. Dabei kann der Kopf 31 des Führungsstiftes 30 in die Sacklochbohrung 16 hinein- und aus dieser herausgelangen.

Die Scheibe 20 ist mit einer weiteren Bohrung 22 ausgebildet, in die ein Haken 51 eines Riegels 50 eingreifen kann. Es kann sich hierbei um eine Durchgangsbohrung oder auch um ein Vierkantloch handeln. Wichtig ist, daß die Bohrung so bemessen ist, daß der Haken 51 in die Öffnung 22 hinein- und aus dieser herausgelangen kann.

Quer zur Bohrung 22, etwa senkrecht, ist in der Scheibe 20 ein Riegelstift 23 befestigt, der mit dem bereits erwähnten Haken 51 zusammenwirken kann.

In den Figuren ist mit 40 ein Anker bezeichnet, der im wesentlichen die Form einer Scheibe hat, jedoch mit einem oder zwei sich in seitlichen Richtungen erstreckenden Klammern 43 und 44 ausgebildet ist. Derartige Greifklammern sind in der Technik bekannt. Sie sind hier nur schematisch wiedergegeben und können jede geeignete Form haben, um die benachbarten Zähne umgreifen zu können.

Der bereits erwähnte Führungsstift 30 ist in einer Bohrung 41 des Ankers so befestigt, daß er sich nur zusammen mit dem Anker 40 bewegen kann.

In einer Öffnung 45 ist der bereits erwähnte Riegel 50 am Anker 40 schwenkbar befestigt. Die Verschwenkung geschieht um einen Schwenkstift 42, der von der Seite her über eine Bohrung in den Anker 40 zusammen mit dem Riegel 50 eingesetzt wird.

In den Figuren ist die sogenannte Abstandslage gezeigt, die die beiden Teile (Prothesenteil 10 und Anker 40) zueinander einnehmen müssen, damit die mehrteilige Brücke an Ort und Stelle eingesetzt oder von dort entnommen werden kann. Es ist ersichtlich, daß die Brücke wegen der Vorsprünge 11 und 12 nicht von oben her in die Zahnlücke eingesetzt werden kann, sondern in der Abstandslage durch eine seitliche Bewegung.

Befinden sich die beiden Teile 10 und 40 in der gezeigten räumlichen Lage zueinander an der vorgesehenen Stelle im Mund eines Patienten, so werden die beiden Teile 10 und 40 aufeinanderzubewegt. Hierzu dient der Riegel 50, indem dieser im Uhrzeigersinn bei Betrachtung der Fig. 2 geschwenkt wird. Dadurch gelangt der Riegelstift 23 in die Öffnung des Hakens 51, so daß die beiden Teile 10 und 40 ihre Eingriffslage einnehmen. Dies ist die Lage, in der die Brücke ihre eigentliche Funktion ausüben kann.

Der Hakens 51 bzw. seine Öffnung ist so ausgestaltet, daß durch keine Kaubewegung eine Trennung der beiden Teile 10 und 40 voneinander möglich ist. Derartige technische Lösungen sind bekannt (selbsthemmender Eingriff).

Der in den Mundinnenraum vorstehende Teil des Riegels 50 nimmt in der Eingriffslage eine solche Stellung ein, daß er durch keine äußeren Kräfte in Öffnungsrichtung beansprucht werden kann. Lediglich durch Hintergreifen mit dem Fingernagel kann der Riegel 50 bei Blickrichtung nach Fig. 2 im Gegenuhrzeigersinn verschwenkt werden, und die beiden Teile 10 und 40 können in die in der Fig. 2 gezeigte Lage zurückgebracht werden.

Der im Zusammenhang mit einer Brücke beschriebene Mechanismus kann auch an einer sogenannten Transversalverbindung eingesetzt werden, welche im Ober- oder Unterkiefer die verschiedenen Prothesenelemente in beiden Kieferhälften miteinander verbindet. Dies ermöglicht dann, herausnehmbare Transversalverbindungen zu realisieren, die selbst dann eingesetzt werden können, wenn die den Prothesenelementen benachbarten Zähne stark divergierende Richtungen haben. Durch die Relativbeweglichkeit des eigentlichen Prothesenelementes in bezug auf den Anker, an dem sich die Klammern bzw. Klammerarme befinden, kann die Divergenz der unter sich gehenden Räume überwunden werden.

**Patentansprüche**

1. Herausnehmbare Zahnprothese, aufweisend ein Prothesenteil (10), einen Anker (40) mit Klammern (43, 44) zum Umgreifen der dem Prothesenteil auf beiden Seiten benachbarten Zähne, und einen Riegel (50) zur Verbindung von Prothesenteil und Anker, wobei das Prothesenteil (10) und der Anker (40) zwischen einer Abstandslage für die Herausnahme aus dem Mund und einer Eingriffslage für die Kautätigkeit bewegbar aneinander befestigt sind und das Prothesenteil (10) mit sich in die unter sich gehenden Bereiche der benachbarten Zähne hineinerstreckenden Vorsprüngen (11, 12) ausgebildet ist,

dadurch gekennzeichnet, daß

mindestens ein Führungsstift (30) entweder in einer Führungsbohrung (32) des Prothesenteils (10) oder in einer am Prothesenteil (10) befestigten Scheibe (20) hin- und herbewegbar geführt und an seinem freien Ende an dem Anker (40) befestigt ist, und daß der Riegel (50) an dem Anker (40) schwenkbar befestigt und mit einem offenen Haken (51) ausgebildet ist, welcher mit einem Riegelstift (23) am Prothesenteil (10) oder an der an diesem befestigten Scheibe (20) in Zusammenklemm- bzw. Riegeleingriff (Eingriffslage von Prothesenteil und Anker) gebracht werden kann.

## Claims

1. Removable dental prosthesis, comprising a prosthesis part (10), an anchor (40) with clamps (43, 44) for embracing the teeth adjacent to either side of the prosthesis part, and a bolt (50) for connecting prosthesis part and anchor, the prosthesis part (10) and the anchor (40) being movably attached to each other between a spaced apart position for the removal from the mouth and an engaged position for mastication and the prosthesis part (10) being provided with projections (11, 12) extending into the underneath areas of the adjacent teeth,
characterized in that
at least one guide pin (30) is guided to be reciprocally movable in either a guide bore (32) of the prosthesis part (10) or a disc (20) mounted to the prosthesis part (10) arid is secured with its free end to the anchor (40), and that the bolt (50) is pivotally connected to the anchor (40) and is provided with an open hook (51) which, by means of a bolt pin (23), can be brought into clamping engagement or bolt engagement (engaged position of prosthesis part and anchor) with the prosthesis part (10) or with the disc (20) mounted thereto.

## Revendications

1. Prothèse dentaire amovible, comprenant une pièce de prothèse (10), un ancrage (40) comportant des crochets (43, 44) pour s'agripper autour des dents voisines situées des deux côtés, et un verrou (50) pour relier ensemble la pièce de prothèse et l'ancrage, la pièce de prothèse (10) et l'ancrage (40) étant fixés entre eux tout en pouvant se déplacer entre une position de sortie, pour extraire la prothèse de la bouche, et une position de prise, pour la mastication, et la pièce de prothèse (10) étant réalisée avec des saillies (11, 12) pénétrant dans les zones d'interpénétration des dents voisines,
caractérisée en ce qu'au moins une tige de guidage (30) est guidée, tout en pouvant coulisser dans les deux sens, dans un alésage de guidage (32) de la pièce de prothèse (10) ou dans un disque (20) fixé sur la pièce de prothèse (10) et est fixée, à son extrémité libre, sur l'ancrage (40), et en ce que le verrou (50) est fixé sur l'ancrage (40) de façon à pouvoir basculer et est réalisé avec un crochet ouvert (51) qui peut être mis en position d'accrochage ou verrouillage avec une tige de verrouillage (23) prévue sur la pièce de prothèse (10) ou sur le disque (20) fixé sur cette dernière, (position de prise de la pièce de prothèse et de l'ancrage).

*Fig. 1*

Fig. 2